# EUROPÄISCHE PATENTSCHRIFT

(11) **EP 1 046 769 B1**
(45) Veröffentlichungstag und Bekanntmachung des Hinweises auf die Patenterteilung: **07.07.2004**
(21) Anmeldenummer: 00107552.2
(22) Anmeldetag: 07.04.2000
(51) Int. Cl.: E05B 13/10, E05B 1/00, H02B 1/38

(54) **Schwenkhebelverschluss mit Druckknopfverriegelung für den Schwenkhebel**
Pivoting lever closure with push-button fastener for the pivoting lever
Serrure à levier pivotant avec fermeture à bouton-poussoir pour le levier pivotant

(30) Priorität: 19.04.1999 DE 29906800 U
(43) Veröffentlichungstag der Anmeldung: 25.10.2000
(73) Patentinhaber: EMKA BESCHLAGTEILE GmbH & Co. KG, D-42551 Velbert (DE)
(72) Erfinder: Sauerland, Manfred, 45144 Essen (DE); Hoffmann, Rainer, 40764 Langenfeld (DE)
(74) Vertreter: Müller, Karl-Ernst, Dr., Dipl.-Ing.

(56) Entgegenhaltungen:
- GB-A- 1 582 667
- GB-A- 2 275 964
- GB-A- 2 275 965

## Beschreibung

Die Erfindung betrifft einen Schwenkhebelverschluß zum Verriegeln von vorzugsweise Schaltschranktüren oder ähnlichen Türen oder Klappen mit einer auf der Außenseite des Türblattes oder der Klappe befestigten Grundplatte und mit einem in eine in der Grundplatte ausgebildete Muldung einklappbaren, zur Betätigung der Schließeinrichtung des Schwenkhebelverschlusses eingerichteten und in der Grundplatte schwenkbar angeordneten Schwenkhebel, wobei eine Verriegelungseinrichtung zum Festlegen des in seiner aus der Muldung herausgeklappten Stellung federbelasteten Schwenkhebels in der Grundplatte vorgesehen ist.

Ein Schwenkhebelverschluß mit den vorgenannten Merkmalen ist in der EP 0 261 266 B1 beschrieben. Bei dem bekannten Schwenkhebelverschluß weist die Grundplatte zwei durch das Türblatt hindurchreichende und insoweit an dem Türblatt ausgebildete Durchbrüche erfordernde Ansätze auf, wobei der eine Ansatz als Lager für die Betätigungswelle des in der Muldung der Grundplatte versenkbar angeordneten Schwenkhebels dient und der andere Ansatz zur Aufnahme eines am zugeordneten Ende des Schwenkhebels an diesem befestigten Zylinderschloß angerichtet ist, so daß in der Schließstellung des Zylinders dessen Schließdaumen hinter die Wandung des Ansatzes der Grundplatte greift und so den Schwenkhebel in der Muldung der Grundplatte festlegt. Wird der Schließdaumen des Zylinderschlosses in seine Öffnungsstellung verdreht, so wird der Schwenkhebel freigegeben und klappt unter der Wirkung einer im Bereich seiner Betätigungswelle angeordneten Feder aus der Muldung der Grundplatte heraus, so daß über die Drehung des Schwenkhebels die Schließeinrichtung des Schwenkhebelverschlusses in Form eines Vorreibers oder eines Stangenschlosses mit zugeordneten Verriegelungsstangen betätigbar ist.

Mit dem bekannten Schwenkhebelverschluß ist der Nachteil verbunden, daß jeweils zwei Durchbrüche zur Aufnahme der beiden Ansätze der Grundplatte im Türblatt vorgesehen sein müssen, um die Grundplatte auf dem Türblatt aufsetzen und in den Durchbrüchen ausrichten zu können; aufgrund der unterschiedlichen Funktionen der Ansätze sind die Ansätze der Grundplatte der Lagerfunktion beziehungsweise der Verriegelungsfunktion für den Schwenkhebel fest zugeordnet, so daß die Einbausituation des Schwenkhebelverschlusses vorgezeichnet ist.

Aus der GB-A-2 275 964 ist eine weiterer gattungsgemäßer Schwenkhebelverschluß bekannt, bei dem die Verriegelungseinrichtung zum Festhalten des vorgespannten Schwenkhebels in der in die Muldung der Grundplatte eingeklappten Stellung in der Grundplatte selbst angeordnet ist, so daß kein durch das Türblatt beziehungsweise die Klappe ragender Ansatz mehr erforderlich ist und insoweit auf den zweiten Durchbruch im Türblatt oder der Klappe verzichtet werden kann; für die Montage des Schwenkhebelverschlusses ist nur noch ein einziger Durchbruch zum Hindurchführen der Betätigungswelle des Schwenkhebels erforderlich. Damit ergibt sich jedoch bei einer links angeschlagenen beziehungsweise einer rechts angeschlagenen Tür oder Klappe mit nur einem Durchbruch das Problem des Umbaus des Schwenkhebelverschlusses mit einer Zuordnung von dessen Betätigungswelle zu dem einen Durchbruch.

Der Erfindung liegt daher die Aufgabe zugrunde, einen Schwenkhebelverschluß mit den eingangs genannten Merkmalen derart weiterzubilden, daß ein Umbau des Schwenkhebelverschlusses von einer links angeschlagenen auf eine rechts angeschlagene Tür oder Klappe beziehungsweise umgekehrt einfach zu bewerkstelligen ist.

Die Lösung dieser Aufgabe bildet ein Schwenkhebelverschluß gemäß Anspruch 1. Vorteilhafte Ausgestaltungen und Weiterbildungen der Erfindung sind in den abhängigen Patentansprüchen aufgeführt.

Die Erfindung sieht in ihrem Grundgedanken vor, daß die Grundplatte symmetrisch ausgebildet ist und die Verriegelungseinrichtung, bestehend aus dem Stopfen und dem in diesem geführten Schieber von der einen Öffnung der Grundplatte in die andere Öffnung der Grundplatte leicht umsteckbar ist, so daß die gleichen Bauteile ohne Änderung Verwendung finden können und ein Umbau des Schwenkhebelverschlusses auch ohne Zuhilfenahme von Werkzeugen möglich ist.

Nach einem Ausführungsbeispiel der Erfindung ist vorgesehen, daß an dem im Schwenkhebel beweglichen Druckknopf zum Schieber gerichtete Schrägen angeordnet sind, die mit an dem Schieber angeordneten Schrägen zur Verschiebung des Schiebers in dessen Freigabestellung für den Schwenkhebel zusammenwirken.

Zur Halterung des Schiebers in den Stopfen ist vorgesehen, daß der Stopfen eine Mittenöffnung zur Aufnahme des Schiebers und an seiner dem Schwenkhebel abgekehrten Seite eine Führungsbahn zur Aufnahme eines am Schieber angeordneten Führungssockels aufweist.

Im Hinblick auf die Federbelastung des Schiebers in dessen den Schwenkhebel festhaltenden Stellung ist vorgesehen, daß zwischen der Wandung der Mittenöffnung des Stopfens und dem Schieber eine diesen in seine Verriegelungsstellung für den Schwenkhebel vorspannende Feder angeordnet ist, wobei zweckmäßig die Feder mit ihrem einen Ende auf einem an der Wandung der Mittenöffnung des Stopfens vorgesehenen Zapfen geführt und mit ihrem anderen Ende in eine Federausnehmung am Schieber eingelegt ist.

In der Zeichnung ist ein Ausführungsbeispiel der Erfindung wiedergegeben, welches nachstehend beschrieben ist. Es zeigen:
- Fig. 1:: einen montierten Schwenkhebelverschluß in einer Perspektivansicht,
- Fig. 2:: die Grundplatte des Schwenkhebelverschlusses gemäß Figur 1 in einer Vorderansicht,
- Fig. 3:: die Grundplatte gemäß Figur 2 in einer Rückansicht,
- Fig. 4:: den Schwenkhebel des Schwenkhebelverschlusses in einer geschnittenen Seitenansicht,
- Fig. 5:: den in den Schwenkhebel gemäß Figur 4 einzusetzenden Druckknopf in einer Vorderansicht,
- Fig. 6:: den Druckknopf gemäß Figur 5 in einer Rückansicht,
- Fig. 7:: den Stopfen zur Halterung der Verriegelungseinrichtung für den Schwenkhebel in einer Draufsicht,
- Fig. 8:: den Stopfen gemäß Figur 7 in einer geschnittenen Seitenansicht,
- Fig. 9:: den in dem Stopfen verschiebbar angeordneten Schieber in einer Seitenansicht,
- Fig. 10:: den Gegenstand der Figur 9 im Schnitt.

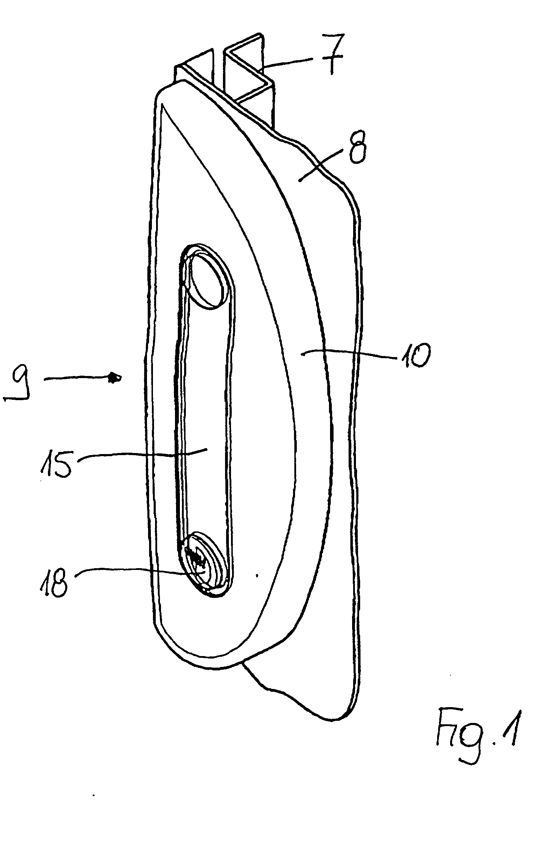

Aus Figur 1 ist die Einbausituation eines Schwenkhebelverschlusses 9 erkennbar, der auf einer Tür 8 eines im einzelnen nicht dargestellten Schaltschrankes befestigt ist, wobei die Tür 8 gegen einen Türrahmen 7 in Anschlag liegt. Auf der Rückseite der Tür 8 befindet sich eine nicht weiter dargestellte Schließeinrichtung beispielsweise in Form eines von dem Schwenkhebel des Schwenkhebelverschlusses 9 betätigbaren Vorreibers, der seinerseits sich in der Schließstellung des Schwenkhebelverschlusses an dem Türrahmen 7 verhakt; alternativ können in bekannter Weise auch auf der Rückseite der Tür geführte Verriegelungsstangen vorgesehen sein, wie dies in der zur Bildung der Gattung des Anspruchs 1 herangezogenen EP 0 261 266 B1 im einzelnen beschrieben ist.

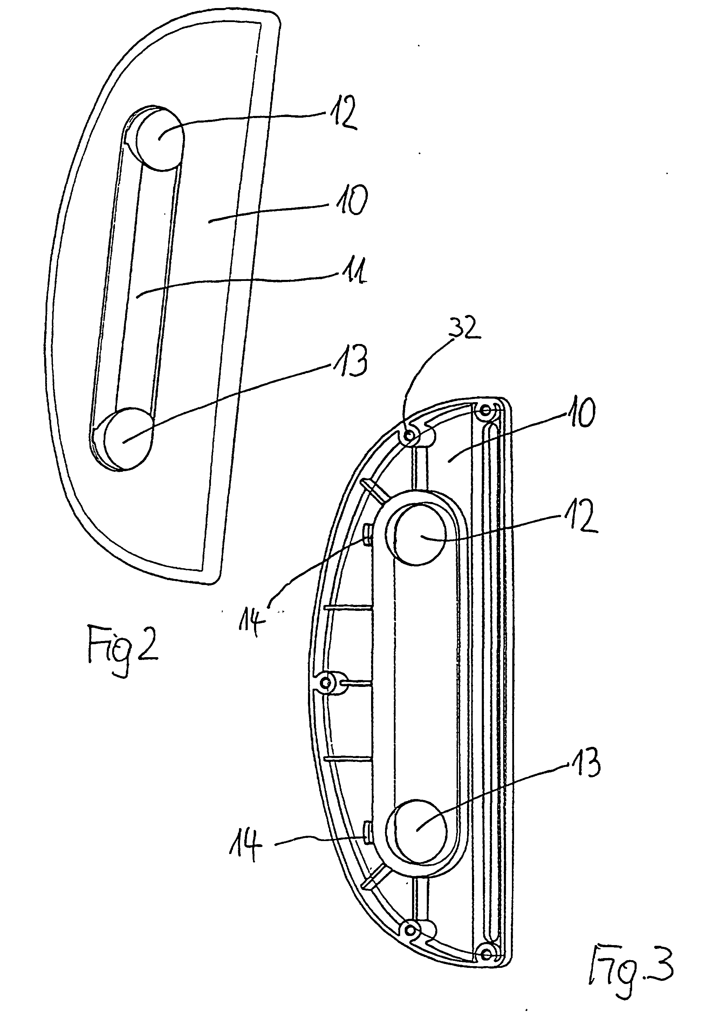

In den Figuren 2 und 3 ist die auf der Tür 8 zu befestigende Grundplatte 10 des Schwenkhebelverschlusses 9 dargestellt, wobei aus Figur 2 die Muldung 11 der Grundplatte 10 erkennbar ist, die der versenkten Anordnung eines Schwenkhebels 15 dient, wie dies sich auch aus Figur 1 entnehmen läßt. Figur 2 wie auch Figur 3 lassen die symmetrische Anordnung von formgleichen Öffnungen an den beiden Enden der Muldung 11 erkennen, und zwar einer ersten Öffnung 12 und einer zweiten Öffnung 13. Wie sich aus der Rückansicht gemäß Figur 3 ergibt, ist auf der Unterseite der Grundplatte 10 jeweils ein Vorsprung 14 angeordnet, der in einer noch zu beschreibenden Weise dem formschlüssigen Festlegen der Verriegelungseinrichtung für die Festlegung des Schwenkhebels 15 in der Muldung 11 dient. Ferner sind aus Figur 3 Schraublöcher 32 erkennbar, in die rückwärtig Schrauben zur Befestigung der Grundplatte 10 an der Tür 8 eingedreht werden können.

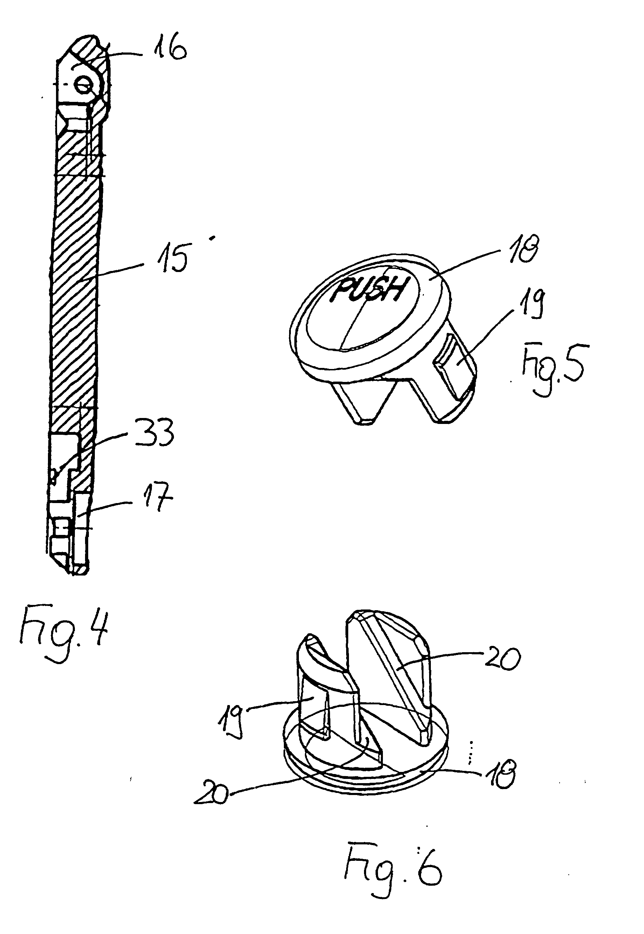

Der in Figur 4 dargestellte Schwenkhebel weist an seinem oberen Ende eine Ausnehmung 16 zum Einsetzen eines nicht dargestellten Gelenkdorns der angesprochenen Betätigungswelle auf, ferner an seinem unteren Ende eine Öffnung 17 zum Einsetzen eines aus den Figuren 5 und 6 näher ersichtlichen Druckknopfes 18. Oberhalb der Öffnung 17 ist an dem Schwenkhebel 15 auf seiner der Grundplatte 10 zugewandten Unterseite noch eine Ausnehmung 33 zum Eingriff des den Schwenkhebel 15 festhaltenden Schiebers (Figuren 9, 10) ausgebildet.

In die Öffnung 17 des Schwenkhebels 15 (Figur 4) ist der in den Figuren 5 und 6 im einzelnen dargestellte Druckknopf 18 einsetzbar, der mit Rasten 19 in dem Schwenkhebel 15 derart festlegbar ist, daß der Druckknopf 18 bei in der Grundplatte 10 montiertem Schwenkhebel 15 senkrecht zur Ebene der Grundplatte und in Richtung auf die Grundplatte 10 eindrückbar ist, und zwar gegen die Wirkung einer nicht dargestellten Feder, die den Druckknopf 18 in seine Ruhelage vorspannt. An dem Druckknopf 18 sind bei dem dargestellten Ausführungsbeispiel unter 45° verlaufende Schrägen 20 angeordnet, mit denen der Druckknopf bei seiner Eindrückbewegung in den Schwenkhebel 15 mit dem noch zu beschreibenden Schieber als Verriegelungseinrichtung für den Schwenkhebel 15 zusammenwirkt.

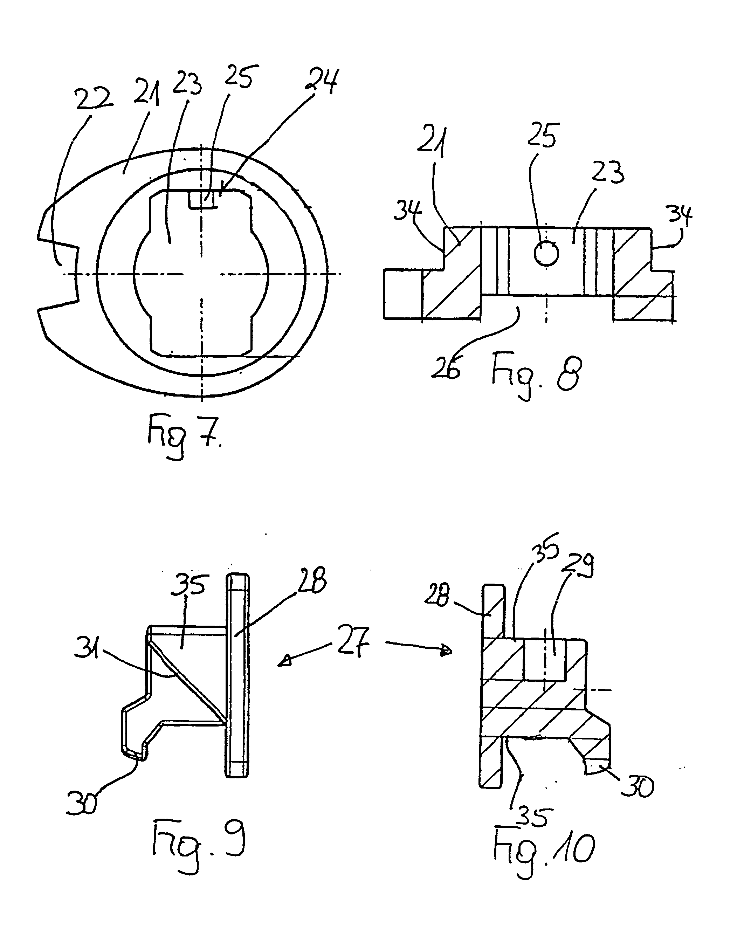

In jede der beiden in der Grundplatte 10 ausgebildeten Öffnungen 12 bzw. 13 ist der in den Figuren 7 bzw. 8 dargestellte Stopfen 21 wahlweise einsteckbar, je nachdem welche der beiden Öffnungen in der zugeordneten Einbausituation des Schwenkhebelverschlusses bei einer links angeschlagenen oder einer rechts angeschlagenen Tür dem Hindurchführen der Betätigungswelle des Schwenkhebels 15 dient. In die jeweils andere Öffnung ist der Stopfen 21 einsetzbar, der über das Eingreifen seiner äußeren Ausnehmung 22 in den zugeordneten Vorsprung 14 der Grundplatte 10 in der zugeordneten Öffnung 12 bzw. 13 der Grundplatte 10 formschlüssig festlegbar ist. Der Stopfen 21 weist eine Mittenöffnung 23 zur Aufnahme des noch zu beschreibenden Schiebers auf, wobei von einem Teil der Wandung 24 der Mittenöffnung 23 ein Zapfen 25 in die Mittenöffnung 23 hineinragend angeordnet ist. Der Stopfen 21 ragt von der Unterseite der Grundplatte 10 her mit einem Ansatz 34 in die zugeordnete Öffnung 12 bzw. 13 der Grundplatte hinein und weist auf seiner bei montierter Grundplatte 10 der Tür 8 zugewandten Unterseite eine Führungsbahn 26 auf.

Der im einzelnen in den Figuren 9 und 10 dargestellte Schieber 27 ist mit seinem Mittelteil 35 durch die Mittenöffnung 23 des Stopfens 21 hindurchgesteckt und weist an seiner Unterseite einen in die Führungsbahn 26 des Stopfens 21 formschlüssig eingreifenden Führungssockel 28 auf. Auf der dem Führungssockel 28 gegenüberliegenden Seite des Mittelteils 35 hat der Schieber 27 eine Verriegelungsnase 30, die mit der Ausnehmung 33 im Schwenkhebel 15 in der Verriegelungsstellung des Schiebers 27 zusammenwirkt. In diese Verriegelungsstellung ist der Schieber 27 durch eine nicht dargestellte Feder vorgespannt, die mit ihrem einen Ende auf dem Zapfen 25 des Stopfens 21 geführt ist und mit ihrem anderen Ende in einer Federausnehmung 29 des Mittelteils 35 des Schiebers 27 liegt. Wie sich aus Figur 9 entnehmen läßt, sind seitlich an dem Mittelteil 35 des Schiebers 27 unter 45° verlaufende Schrägen 31 ausgebildet, die mit den Schrägen 20 des Druckknopfes 18 zusammenwirken, wozu das Mittelteil 35 des Schiebers 27 zwischen die Schenkel des U-förmig ausgebildeten Druckknopfes 18 greift.

Wird bei dem in der Darstellung der Figur 1 in der Grundplatte 10 verriegelten Schwenkhebel 15 der Druckknopf 18 eingedrückt, so schieben die an dem Druckknopf 18 ausgebildeten Schrägen 20 über deren Anlage an den Schrägen 31 des Schiebers 27 diesen in der Mittenöffnung 23 des Stopfens 21 in eine Lage, in welcher die Verriegelungsnase 30 des Schiebers 27 den Schwenkhebel 15 freigibt, so daß dieser aus der Grundplatte 10 herausklappt. Anschließend sorgt die zwischen Stopfen 21 und Schieber 27 vorgespannte Feder für die Rückführung des Schiebers 27 in dessen Verriegelungsstellung, so daß die Verriegelungsnase 30 beim Eindrücken des Schwenkhebels 15 in die Muldung 11 der Grundplatte 10 den Schwenkhebel 15 erneut verriegelt.

Soll der Schwenkhebelverschluß gemäß Figur 1 in einer um 180° gedrehten Stellung eingebaut werden, so ist es lediglich erforderlich, den Schwenkhebel 15 im Bereich der ersten Öffnung 12 und der dadurch geführten Betätigungswelle auszubauen. Anschließend braucht nur der Stopfen 21 mit dem darin geführten Schieber 27 aus der zweiten Öffnung 13 entfernt und nach Drehen der Grundplatte 10 in die dann zugeordnete untere Öffnung der Grundplatte eingesteckt zu werden. Damit steht wiederum vollständig die Verriegelungseinrichtung für den Schwenkhebel zur Verfügung, der mit seiner Betätigungswelle dann in der zugeordneten oberen Öffnung der Grundplatte 10 zu montieren ist.

## Patentansprüche

1. Schwenkhebelverschluß (9) zum Verriegeln von vorzugsweise Schaltschranktüren (8) oder ähnlichen Türen oder Klappen mit einer auf der Außenseite des Türblattes oder der Klappe befestigten Grundplatte (10) und mit einem in eine in der Grundplatte (10) ausgebildete Muldung (11) einklappbaren, zur Betätigung der Schließeinrichtung des Schwenkhebelverschlusses (9) eingerichteten und in der Grundplatte (10) schwenkbar angeordneten Schwenkhebel(15), wobei eine Verriegelungseinrichtung zum Festlegen des in seiner aus der Muldung (11) herausgeklappten Stellung federbelasteten Schwenkhebels (15) in der Grundplatte (10) vorgesehen ist, **dadurch gekennzeichnet, daß** die Grundplatte (10) an den beiden Enden ihrer Muldung (11) jeweils eine formgleiche Öffnung (12, 13) aufweist, wobei die eine Öffnung (12) zum Durchtritt der Betätigungswelle des Schwenkhebels (15) vorgesehen ist und in die andere Öffnung (13) ein Stopfen (21) mit einem in dem Stopfen (21) federbelastet verschiebbar geführten Schieber (27) als Verriegelungseinrichtung für den Schwenkhebel (15) eingesetzt und formschlüssig festgelegt ist, wobei der Schieber (27) in seiner Verriegelungsstellung mit einer Nase (30) in den Schwenkhebel (15) eingreift und von an einem am zugeordneten Ende des Schwenkhebels (15) in dem Schwenkhebel beweglich angeordneten Druckknopf (18) in seine Freigabestellung für den Schwenkhebel (15) verschiebbar ist.

2. Schwenkhebelverschluß nach Anspruch 1, **dadurch gekennzeichnet, daß** an dem im Schwenkhebel (15) beweglichen Druckknopf (18) zum Schieber (27) gerichtete Schrägen (20) angeordnet sind, die mit an dem Schieber (27) angeordneten Schrägen (31) zur Verschiebung des Schiebers (27) in dessen Freigabestellung für den Schwenkhebel (15) zusammenwirken.

3. Schwenkhebelverschluß nach Anspruch 1 oder 2, **dadurch gekennzeichnet, daß** der Stopfen (21) eine Mittenöffnung zur Aufnahme des Schiebers (27) und an seiner dem Schwenkhebel (15) abgekehrten Seite eine Führungsbahn (26) zur Aufnahme eines am Schieber (27) angeordneten Führungssockels (28) aufweist.

4. Schwenkhebelverschluß nach einem der Ansprüche 1 bis 3, **dadurch gekennzeichnet, daß** zwischen der Wandung (24) der Mittenöffnung (23) des Stopfens (21) und dem Schieber (27) eine diesen in seine Verriegelungsstellung für den Schwenkhebel (15) vorspannende Feder angeordnet ist.

5. Schwenkhebelverschluß nach Anspruch 4, **dadurch gekennzeichnet, daß** die Feder mit ihrem einen Ende auf einem an der Wandung (24) der Mittenöffnung (23) des Stopfens (21) vorgesehenen Zapfen (25) geführt und mit ihrem anderen Ende in eine Federausnehmung (29) am Schieber (27) eingelegt ist.

## Claims

1. Pivoted lever fastener (9), preferably for locking switch cabinet doors (8) or similar doors or flaps, with a base plate (10), which is attached to the outside of the door leaf or the flap, and with a pivoted lever (15), which can be swung into a depression (11) formed in the base plate (10), is adapted to actuate the closing device of the pivoted lever fastener (9) and is pivotably disposed in the base plate (10), wherein a locking device is provided to secure the pivoted lever (15), which is spring-loaded when positioned swung-out of the depression (11), in the base plate (10), **characterised in that** the base plate (10) comprises a respective opening (12, 13) of the same shape at both ends of its depression (11), wherein one opening (12) is provided for the passage of the actuating shaft of the pivoted lever (15), and a stopper (21) with a slide (27) is inserted and positively secured in the other opening (13) as the locking device for the pivoted lever (15), which slide is guided in a spring-loaded, displaceable fashion in the stopper (21), wherein the slide (27) engages by way of a lug (30) in the pivoted lever (15) in its locking position and can be displaced into its release position for the pivoted lever (15) by a push button (18) disposed at the associated end of the pivoted lever (15) such that it can move in the pivoted lever.

2. Pivoted lever fastener according to Claim 1, **characterised in that** slopes (20), which are directed towards the slide (27), are disposed at the push button (18) which can move in the pivoted lever (15), which slopes co-operate with slopes (31), disposed at the slide (27), for displacing the slide (27) into its release position for the pivoted lever (15).

3. Pivoted lever fastener according to Claim 1 or 2, **characterised in that** the stopper (21) comprises a centre opening for accommodating the slide (27) and, at its side which is remote from the pivoted lever (15), a guideway (26) for accommodating a guide base (28) disposed at the slide (27).

4. Pivoted lever fastener according to any one of Claims 1 to 3, **characterised in that** a spring is disposed between the wall (24) of the centre opening (23) of the stopper (21) and the slide (27), which spring biases the latter into its locking position for the pivoted lever (15).

5. Pivoted lever fastener according Claim 4, **characterised in that** the spring is guided by way of one end on a pin (25), which is provided at the wall (24) of the centre opening (23) of the stopper (21), and is placed by way of its other end in a spring recess (29) at the slide (27).

## Revendications

1. Fermeture par levier pivotant (9) pour le verrouillage, de préférence, de portes d'armoire de commande (8), ou de portes ou abattants similaires, avec une plaque de base (10) fixée sur le côté extérieur du vantail de porte de l'abattant et avec un levier pivotant (15), escamotable dans une cavité (11) conçue dans la plaque de base (10), aménagé pour l'actionnement du dispositif de fermeture de la fermeture par levier pivotant (9) et disposé de façon pivotante dans la plaque de base (10), un système de verrouillage pour la fixation du levier pivotant (15) sollicité par ressort dans sa position sortie de la cavité (11) étant prévu dans la plaque de base (10), **caractérisée en ce que** la plaque de base (10) présente sur chacune des deux extrémités de sa cavité (11) une ouverture (12, 13) de forme identique, une ouverture (12) étant prévue pour le passage de l'arbre d'actionnement du levier pivotant (15) et un bouchon (21) avec un coulisseau (27), guidé de façon déplaçable et sollicité par ressort dans le bouchon (21), étant inséré dans l'autre ouverture (13) comme système de verrouillage pour le levier pivotant (15) et étant fixé par conjugaison de forme, le coulisseau (27) s'engageant dans sa position de verrouillage avec un ergot (30) dans le levier pivotant (15) et pouvant être détaché par un bouton poussoir (18) disposé de façon mobile sur l'extrémité attribuée du levier pivotant (15) dans le levier pivotant dans sa position de libération pour le levier pivotant (15).

2. Fermeture par levier pivotant selon la revendication 1, **caractérisée en ce que**, sur le bouton poussoir (18) mobile dans le levier pivotant (15), sont disposés des chanfreins (20) orientés vers le coulisseau (27), qui coopèrent avec des chanfreins (31) disposés sur le coulisseau (27) pour le déplacement du coulisseau (27) dans sa position de libération du levier pivotant (15).

3. Fermeture par levier pivotant selon la revendication 1 ou 2, **caractérisée en ce que** le bouchon (21) présente une ouverture centrale pour le logement du coulisseau (27) et, sur son côté opposé au levier pivotant (15) , une glissière de guidage (26) pour le logement d'un socle de guidage (28) disposé sur le coulisseau (27).

4. Fermeture par levier pivotant selon l'une quelconque des revendications 1 à 3, **caractérisée en ce que**, entre la paroi (24) de l'ouverture centrale (23) du bouchon (21) et le coulisseau (27) est disposé un ressort qui pré-tend ce coulisseau dans sa position de verrouillage pour le levier pivotant (15).

5. Fermeture par levier pivotant selon la revendication 4, **caractérisée en ce que** le ressort est guidé par une de ses extrémités sur un tenon (25) prévu sur la paroi (24) de l'ouverture centrale (23) du bouchon (21) et est inséré par son autre extrémité dans un évidement de ressort (29) sur le coulisseau (27).
